# EUROPÄISCHE PATENTSCHRIFT

(11) **EP 0 350 721 B1**
(45) Veröffentlichungstag und Bekanntmachung des Hinweises auf die Patenterteilung: **23.03.1994**
(21) Anmeldenummer: 89111837.4
(22) Anmeldetag: 29.06.1989
(51) Int. Cl.: F16K 17/34, G05D 7/01

(54) **Durchflussbegrenzer**
Flow limiter
Limiteur de débit

(30) Priorität: 09.07.1988 DE 3823368; 30.11.1988 DE 3840331; 30.11.1988 DE 3840330
(43) Veröffentlichungstag der Anmeldung: 17.01.1990
(73) Patentinhaber: DIETER WILDFANG GmbH, D-79379 Müllheim (DE)
(72) Erfinder: Wildfang, Dieter, Dipl.-Ing., D-7840 Mühlheim (DE); Nehm, Holger, D-7840 Mühlheim (DE)
(74) Vertreter: Schmitt, Hans, Dipl.-Ing.

(56) Entgegenhaltungen:
- DE-A- 1 650 209
- DE-A- 2 616 566
- FR-A- 1 367 650
- US-A- 2 878 836
- US-A- 3 837 363

## Beschreibung

Die Erfindung betrifft einen Durchflußbegrenzer für in Leitungen strömende Medien mit einem in einer Ausnehmung eines Gehäuses untergebrachten, sich unter der beim Durchströmen bildenden Druckdifferenz verformenden, je nach seiner Verformung den Durchflußquerschnitt ändernden elastischen, ringförmigen Drosselkörper, der abströmseitig auf einer Ringschulter aufliegt und mit einem von der Einlaßseite nach der Auslaßseite des Begrenzers verlaufendem, zwischen dem Drosselkörper und einem darin eingreifenden, zentrischen Zapfen gebildeten Durchlaufringraum.

Aus der DE-A 20 60 751 ist bereits ein Druchflußbegrenzer bekannt, der jedoch einen vergleichsweise komplizierten Aufbau aufweist und der auch hinsichtlich seines Regelverhaltens und des Durchströmungsgeräusches noch verbesserungswürdig ist.

Ein aus der gattungsbildenden DE-A 26 16 566 bekannter Durchflußbegrenzer der eingangs erwähnten Art weist zwar unter anderem bereits eine verbesserte Geräuschdämpfung auf, es hat sich jedoch herausgestellt, daß die Durchflußmenge im unteren Druckbereich vergleichsweise große Abweichungen vom Sollwert aufweist. Außerdem ist eine gewisse Anfälligkeit gegen Ablagerungen und Verstopfung durch im Wasser enthaltene Feststoffe vorhanden.

Aufgabe der vorliegenden Erfindung ist es, einen Durchflußbegrenzer der eingangs erwähnten Art zu schaffen, dessen Steuerkennlinie verbessert ist, wobei auch schon bei kleineren Drücken der vorgesehene Durchfluß-Sollwert erreicht wird und dieser Sollwert bei zunehmendem Druck mit guter Genauigkeit gehalten wird; dabei sollen auch die Verschmutzungsgefahr und auch die Geräuschentwicklung reduziert sein.

Zur Lösung dieser Aufgabe werden die im Anspruch 1 aufgeführten Maßnahmen vorgeschlagen, wobei der ringförmige Drosselkörper innerhalb seines Ringbereiches wenigstens eine in Durchflußrichtung orientierte Stau-Ausnehmung aufweist. Durch diese Ausnehmung(en) weist der Drosselkörper eine größere Nachgiebigkeit und Elastizität auf, durch die auch bereits bei geringeren Drücken Verformungen auftreten können, die den Durchfluß auf den vorgesehenen Sollwert einregulieren. Durch die größere Nachgiebigkeit ergibt sich auch ein wesentlich größerer Bewegungshub des Drosselkörpers während des Betriebes, so daß auch der Durchlaufringraum zwischen Drosselkörper und dem darin eingreifenden Zapfen größer ausgebildet werden kann. Dies wiederum ergibt eine geringere Störanfälligkeit gegen Verschmutzen und Verstopfen.

Eine bevorzugte Ausführungsform der Erfindung sieht vor, daß die Durchgangsöffnungen im außenrandnahen Bereich des Drosselkörpers angeordnet und als vorzugsweise radial nach außen hin randoffene Nuten gebildet sind. Diese Ausbildung der Durchgangsöffnungen hat sich in Versuchen für das angestrebte Regelverhalten des Durchflußbegrenzers als besonders günstig erwiesen und außerdem hat diese Ausführungsform auch fertigungstechnische Vorteile.
Zweckmäßigerweise sind zwei bis etwa fünfzehn, vorzugsweise zehn Durchgangsöffnungen in dem Drosselkörper vorgesehen. Durch die vergleichsweise große Anzahl der Durchgangsöffnungen, deren Anzahl auch je nach gewünschter Durchflußmenge variiert werden kann, ergibt sich über den Umfang des Drosselkörpers verteilt eine weitgehend gleichmäßige Einschnürung von diesem bei zunehmender Druckbelastung. Je größer auch die Anzahl der Durchgangsöffnungen ist, desto mehr erhöht sich auch die Regelgeschwindigkeit bzw. Regelfähigkeit.

Bei einem Durchflußbegrenzer mit einem sich an den in den Drosselkörper ragenden Zapfen in Strömungsrichtung anschliessenden Steuerkegel, der sich in einem in Strömungsrichtung vorzugsweise konisch erweiternden Gehäusehohlraum befindet, wobei zwischen dem Gehäuse und den Steuerkegel ein Ringspalt gebildet ist und wobei der Gehäusehohlraum durch einen am Steuerkegel befindlichen Flansch oder Ringflansch mit Durchtrittsöffnungen verschlossen ist, ist nach einer Weiterbildung der Erfindung vorgesehen, daß die Durchtrittsöffnungen in dem Steuerkegelflansch als Ringschlitze ausgebildet sind. Durch diese Ringschlitze ist ein größerer Durchlaßquerschnitt vorhanden, und durch den damit verminderten Rückstau ergeben sich im Bereich des Drosselkörpers günstigere Regeleigenschaften. Weiterhin trägt auch dies mit dazu bei, die Verstopfungsgefahr durch Feststoffe zu reduzieren. Vorteilhafterweise sind die Austrittskanten der Durchtrittsöffnungen in dem Steuerkegelflansch scharfkantig ausgebildet. Durch diese Maßnahme wird eine geringere Geräuschentwicklung erzielt. Zur Geräuschminderung trägt auch bei, wenn nach einer Weiterbildung der Erfindung die Außenseite des Steuerkegels und/oder die konische Innenseite des Gehäuses eine aufgerauhte Oberfläche aufweist.

Eine Weiterbildung gemäß der Erfindung sieht vor, daß die Außenseite des Steuerkegels und/oder die sich in Strömungsrichtung erweiternde Innenseite des Gehäuses ringstufen- oder kaskadenförmige Abstufungen aufweist.
Es hat sich überraschenderweise herausgestellt, daß derartige Abstufungen an der Außenseite des Steuerkegels und/oder an der dem Steuerkegel benachbarten Innenseite des Gehäuses zu einer Verminderung der Fließgeschwindigkeit des den Durchflußbegrenzer durchströmenden Mediums und vor allem zu einer Geräuscharmut führen, die mit bekannten Methoden kaum möglich wäre. Mit einem gemäß dieser Weiterbildung ausgestalteten Durchflußbegrenzer läßt sich auch bei Durchflußmengen von beispielsweise 12 l/min noch eine gute, reduzierte Geräuschentwicklung in den gewünschten Grenzbereichen erreichen. Auch ist die Austrittsgeschwindigkeit an der Auslaßseite des erfindungsgemäßen Durchflußbegrenzers entsprechend gering.
Darüber hinaus sind die genannten Abstufungen an der Außenseite des Steuerkegels und/oder an der Innenseite des Gehäuses mit vergleichsweise geringem Aufwand herstellbar.

Zweckmäßig ist es, wenn insbesondere die äußeren, in den Ringspalt ragenden Kanten zwischen den Stufen und den angrenzenden Axialflächen von Steuerkegel und/oder Gehäuse scharfkantig ausgebildet sind. Durch diese scharfen Kanten am Gehäuse und/oder insbesondere am Steuerkegel wird die Verminderung der Strömungsgeschwindigkeit und die vergleichsweise geringe Geräuschbildung bei dem erfindungsgemäßen Durchflußbegrenzer noch zusätzlich begünstigt.

Eine vorteilhafte Ausführung gemäß der Erfindung sieht vor, daß die axialen Höhen der einzelnen Abstufungen von Steuerkegel und/oder Gehäuse im Vergleich zu der in Strömungsrichtung sich jeweils anschließenden Abstufung kleiner ausgebildet sind, d.h., daß die axialen Höhen der einzelnen Abstufungen in Strömungsrichtung zunehmen. Durch die einzelnen Abstufungen verlangsamt sich die Strömungsgeschwindigkeit in Strömungsrichtung. Da die abströmseitigen Abstufungen zunehmend größere axiale Höhen aufweisen, paßt sich der zur Verfügung stehende Durchtrittsquerschnitt besser der geringerwerdenden Durchflußgeschwindigkeit an.

Eine Ausgestaltung der Erfindung sieht vor, daß in die zylindrische Ausnehmung für den Drosselkörper wenigstens zwei in der die Ausnehmung umgrenzenden Wand befindliche und insbesondere diametral angeordnete Steuerbohrungen münden. Diese Steuerbohrungen bilden praktisch Bypass-Bohrungen, durch die der Fließdruck des Wassers seitlich auf den Drosselkörper geleitet wird und dabei dessen Formveränderung in Abhängigkeit des jeweils herrschenden Druckes mit unterstützt.

Zusätzliche Ausgestaltungen der Erfindung sind in den weiteren Unteransprüchen aufgeführt. Nachstehend ist die Erfindung mit ihren wesentlichen Einzelheiten anhand der Figuren noch näher erläutert.

Es zeigt:
- Fig. 1: einen halbseitig im Schnitt gehaltenen Durchflußbegrenzer,
- Fig. 2: einen in einen Strahlregler eingesetzten Durchflußbegrenzer, halbseitig im Schnitt dargestellt,
- Fig. 3: eine Längsschnittdarstellung eines Drosselkörpers,
- Fig. 4: eine Aufsicht eines Drosselkörpers,
- Fig. 5 bis 7: Aufsichten unterschiedlich ausgebildeter Drosselkörper,
- Fig. 8: eine zum Teil aufgebrochen dargestellte Seitenansicht eines Steuerkegels,
- Fig. 9: eine Aufsicht eines Steuerkegels,
- Fig. 10: einen halbseitig im Schnitt gehaltenen Durchflußbegrenzer, dessen Steuerkegel an seiner Außenseite eine aufgerauhte Oberfläche und dessen Gehäuse im Bereich des Steuerkegels ringstufenförmige Abstufungen haben,
- Fig. 11: das Gehäuse des Durchflußbegrenzers aus Fig. 10 in einem Längsschnitt,
- Fig. 12: das Gehäuse des Durchflußbegrenzers aus Fig. 10 und 11 in einer einströmseitigen Draufsicht,
- Fig. 13: einen Durchflußbegrenzer, der sowohl an seinem Steuerkegel als auch an dem benachbarten Bereich des Gehäuses ringstufenförmige Abstufungen aufweist,
- Fig. 14: den Steuerkegel aus Fig. 13 in einer einströmseitigen Draufsicht,
- Fig. 15: den Steuerkegel des Durchflußbegrenzers aus Fig.13 u.14, in einem halbseitigen Längsschnitt mit ringstufenförmigen Abstufungen an seiner Außenseite und
- Fig. 16: einen Durchflußbegrenzer mit verstellbarem Steuerkegel.

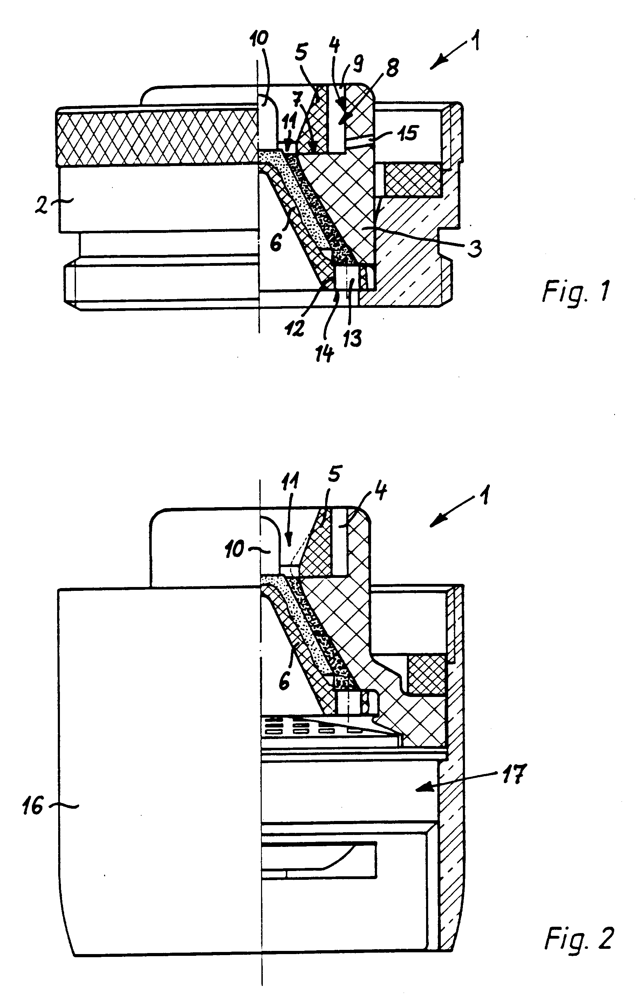

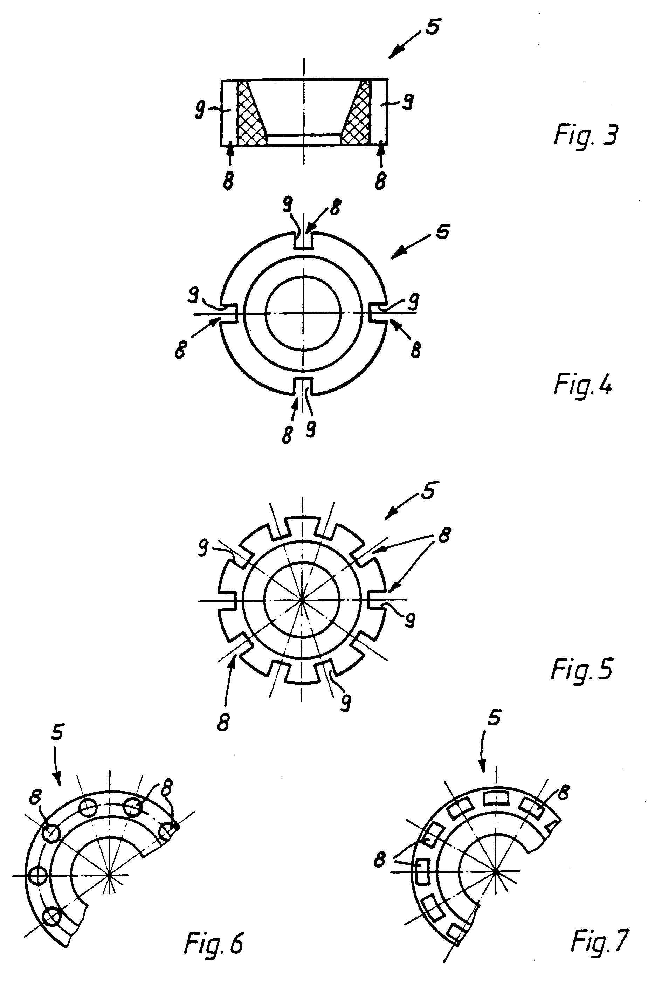

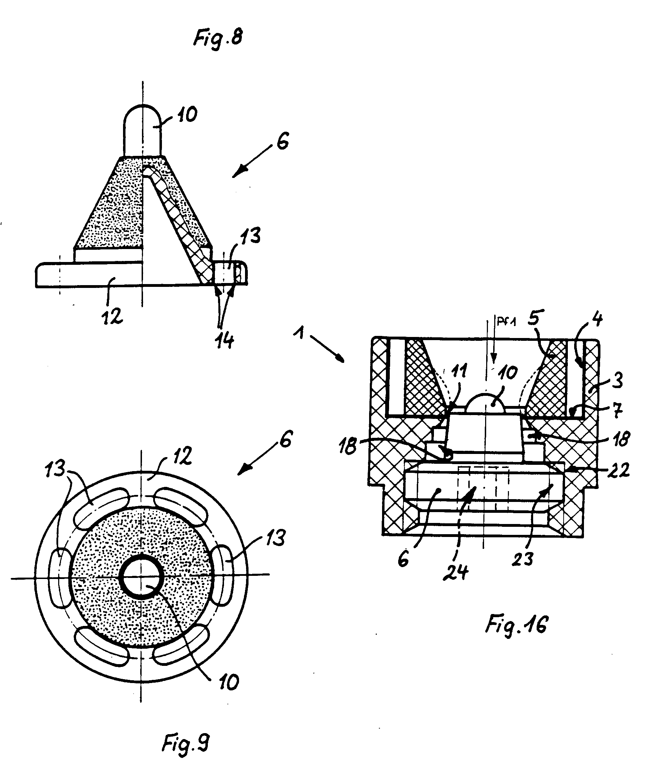

Ein in Fig. 1 gezeigter Durchflußbegrenzer 1 ist in ein Zwischenadapter-Gehäuse 2 eingebaut. Er weist im wesentlichen ein Innengehäuse 3 mit einer zylindrischen Ausnehmung 4, einen dort eingesetzten, ringförmigen Drosselkörper 5 (vgl. Fig. 3 bis 7) und einen Steuerkegel 6 (vgl.Fig.8 u.9) auf.

Mit Hilfe des Durchflußbegrenzers wird die Durchflußmenge weitgehend unabhängig von dem in der Zuleitung herrschenden Druck konstant gehalten. Dies erfolgt im wesentlichen durch Verformen des Drosselkörpers 5 in Abhängigkeit der beim Durchströmen gebildeten Druckdifferenz.

Der Drosselkörper 5 liegt mit einer Ringfläche auf dem Absatz 7 der Ausnehmung 4 auf, wobei diese Auflage einerseits eine Abdichtung und andererseits auch eine Schiebeauflage für radiale Bewegungen des Drosselkörpers 5 bildet. Erfindungsgemäß sind innerhalb des Ringbereiches im außenrandnahen Bereich des Drosselkörpers 5 Durchgangsöffnungen (Stau-Ausnehmungen) 8 vorgesehen, die in den Ausführungsbeispielen nach Fig.1 bis 5 als radial nach außen hin randoffene Nuten 9 ausgebildet sind.
Bei entsprechendem Fließdruck erfolgt nun insbesondere in der Nähe des Absatzes 7 ein Verformen und Einschnüren des Drosselkörpers 5 durch den Staudruck des zwischen Drosselkörper 5 und der Innenseite der zylindrischen Ausnehmung 4 eindringenden Wassers. Diese Verformung würde auch bei einem Drosselkörper 5 ohne Nuten 9 auftreten. Die Nuten 9 sorgen jedoch dafür, daß die Flüssigkeit praktisch ungehindert von oben eindringen kann und durch die im Bereich der Nuten 9 oder dgl. vorhandenen Wandschwächungen des ringförmigen Drosselkörpers 5 erfolgt dort ein verstärktes Ausformen nach innen.
Die Nuten 9 oder dgl. Durchgangsöffnungen (Stau-Ausnehmungen) 8 sind gleichmäßig am Umfang des Drosselkörpers 5 verteilt angeordnet. Die Anzahl der Durchgangsöffnungen kann in Abhängigkeit des jeweils vorgesehenen Betriebsdruckbereiches vorgesehen sein. Bei einer großen Anzahl von Nuten erhält man eine besonders große elastische Nachgiebigkeit, was insbesondere bei Einsatz des Durchflußbegrenzers bei geringen Drücken vorteilhaft ist, da hierbei auch schon diese geringen Drücke ausreichen, um den Drosselkörper 5 nach innen einzuformen.
Der Steuerkegel 6 hat entgegen der Strömungsrichtung als Fortsetzung einen Zapfen 10, der in den Drosselkörper 5 hineinragt. Zwischen diesem Zapfen 10 und dem Drosselkörper 5 befindet sich der Steuerspalt 11. Durch den nun zur Verfügung stehenden, wesentlich größeren Arbeitshub des Drosselkörpers 5 kann der Steuerspalt 11 in seiner radialen Erstreckung vergleichsweise groß ausgebildet sein, so daß die Gefahr des Hängenbleibens von im Wasser mitgeführten Feststoffen wesentlich verringert ist. Da sich dieser Steuerspalt 11 in Abhängigkeit des Fließdruckes ändert, erfolgt ein ständiges Freispülen und Loslösen von eventuell dort hängengebliebenen Feststoffen.

Der Drosselkörper 5 besteht aus weichelastischem Material, wobei wegen der erforderlichen Lebensmittelechtheit bevorzugt Silikon in Frage kommt. Dieses Material hat eine hohe Rückprallelastizität durch die sich der Drosselkörper 5 bei entsprechender Druckreduzierung wieder in seine ursprüngliche Form zurückverformen kann. Auch läßt sich bei Verwendung von solchem Material eine hohe Maßgenauigkeit im Bereich von Hundertstel Millimetern erreichen.

Der Steuerkegel 6 weist an seinem abströmseitigen Ende einen Ringflansch 12 mit Durchtrittsöffnungen 13 auf (vgl. Fig. 8 u. 9). Diese Durchtrittsöffnungen sind nun als Ringschlitze ausgebildet, die auf einem Kreisbogen angeordnet sind. Im Ausführungsbeispiel weist der Ringflansch sechs solcher Durchtrittsöffnungen 13 auf. Insgesamt ist durch diese der gesamte Durchlaßquerschnitt in diesem Bereich vergrößert, so daß der Rückstau im Bereich des Steuerspaltes geringer ist und sich somit günstigere Regeleigenschaften in diesem Bereich ergeben. Weiterhin trägt auch diese Maßnahme dazu bei, daß die Verstopfungsgefahr durch im Wasser mitgeführte Feststoffe reduziert ist.
Die Austrittskanten 14 der Ringflansch-Durchtrittsöffnungen 13 sind scharfkantig ausgebildet, wodurch ein besseres Aufreißen des Wasserstrahles erfolgt und auch eine Geräuschminderung.

Wie in den Ausführungsbeispielen durch Punkte gekennzeichnet,weist die Außenseite des Steuerkegels 6 und auch die konische Innenseite des Gehäuses 3 eine aufgerauhte Oberfläche auf. Dies erhöht die Adhäsion und dient auch zur Geräuschminderung.
Wie in den Figuren 1 bis 3 erkennbar, ist der Drosselkörper 5 zuflußseitig kegelförmig aufgeweitet. Der Zapfen 10 ragt in diesen zentralen Durchtritt des Drosselkörpers 5 hinein, wobei seine Länge kürzer als die axiale Erstreckung des Drosselkörpers ist. Durch die Einschnürung des Drosselkörpers zu dem Steuerspalt 11 hin ergibt sich in dessen Bereich bei höherer Durchströmungsgeschwindigkeit ein geringerer Druck und somit eine Unterstützung der radialen Steuerbewegung des Drosselkörpers 5.
Die die zylindrische Ausnehmung 4 umgrenzende Wandung des Innengehäuses 3 kann, wie in Fig. 1 gezeigt, Steuerbohrungen 15 aufweisen, die innenseitig vorzugsweise in Höhe des Steuerspaltes münden, so daß auch von außen her eine zusätzliche Druckbeaufschlagung zum radialen Einschnüren und Steuern des Drosselkörpers 5 vorhanden ist. Die Steuerbohrungen 15 können radial gerade oder aber schräg mit ihren äußeren Eintrittsöffnungen näher an der Zuströmseite angeordnet sein, wobei die Schrägstellung bezogen auf eine radiale Ebene etwa bis 50° betragen kann und vorzugsweise 15° beträgt. Die Steuerbohrungen können gleichmäßig verteilt am Umfang angeordnet sein, wobei bedarfsweise auch eine Lagezuordnung zu den Durchgangsöffnungen 18 des Drosselkörpers 5 vorgesehen sein kann.

In Fig. 1 ist der Durchflußbegrenzer 1 in ein Zwischenadapter-Gehäuse 2 eingesetzt, welches mit einer Auslaufarmatur verbunden werden kann. Abströmseitig kann an das Zwischenadapter-Gehäuse z. B. ein Strahlregler angeschraubt werden. Die Ausführunsform nach Fig. 2 zeigt bereits eine Kombination eines Durchflußbegrenzers 1 mit einem Mundstück 16, in dem sich ein Strahlreglereinsatz 17 befindet.

In den Figuren 6 und 7 ist noch gezeigt, daß die Durchgangsöffnungen 8 im Drosselkörper 5 als am Umfang geschlossene Durchgangskanäle ausgebildet sein können. Wie auch bei den außenseitig randoffenen Nuten 9 kann die Querschnittsform der Durchgangsöffnungen 8 praktisch beliebig sein. Die Ausbildung, Anordnung, Form und Anzahl der Durchgangsöffnungen 8 kann je nach den Erfordernissen und insbesondere in Abstimmung auf das bei bestimmten Druckbereichen geforderte Regelverhalten des Drosselkörpers 5 vorgesehen sein.
Erwähnt sei noch, daß durch die wesentlich erhöhte, elastische Nachgiebigkeit des Drosselkörpers 5, die wesentlich größer ist als die vom Werkstoff allein her vorhandene Elastizität, auch kleinere Bauformen des Drosselkörpers und somit des gesamten Durchflußbegrenzers möglich sind.

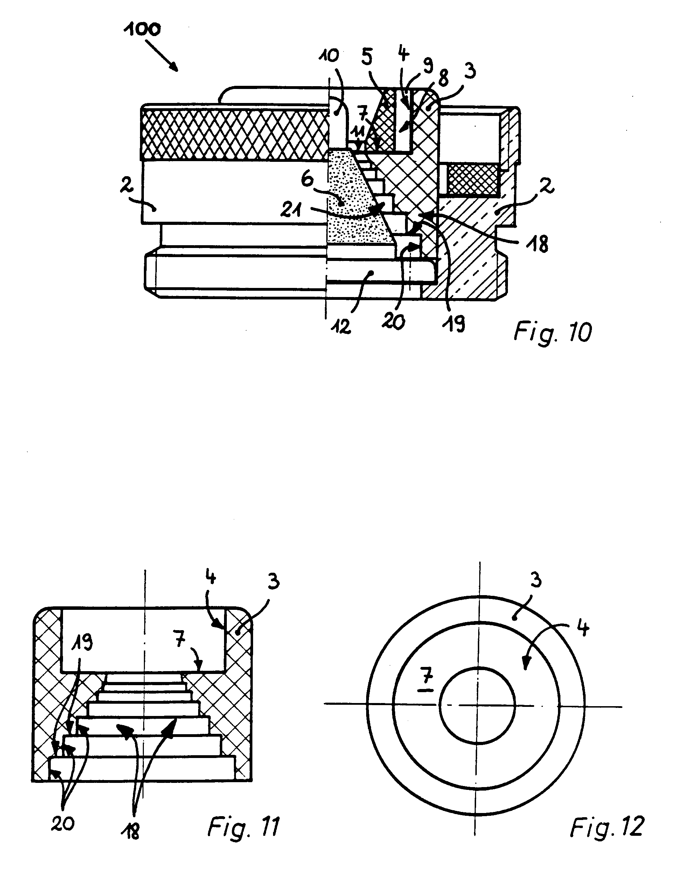

In Fig. 10 ist ein halbseitig im Schnitt gehaltener Durchflußbegrenzer 100 gezeigt, der ebenso wie der Durchflußbegrenzer 1 aus Fig. 1 in ein Zwischenadapter-Gehäuse 2 eingebaut und ähnlich wie der Durchflußbegrenzer 1 ausgebildet ist. Auch der Durchflußbegrenzer 100 weist im wesentlichen ein Innengehäuse 3 auf, in dessen zuströmseitige zylindrische Ausnehmung 4 ein ringförmiger Drosselkörper 5 aus vorzugsweise weichelastischem Material einsetzbar ist. In den Drosselkörper 5 greift ebenfalls ein Zapfen 10 ein, der zusammen mit dem Drosselkörper 5 einen von der Einlaufseite nach der Auslaufseite des Begrenzers 100 hin verlaufenden Durchlaufringraum 11 bildet.

Zur Verminderung des Geräuschpegels weist die Außenseite des Steuerkegels 6 eine aufgerauhte Oberfläche und die sich in Strömungsrichtung erweiternde Innenseite des Gehäuses 3 ringstufen- oder kaskadenförmige Abstufungen 18 auf. Dabei liegen die Stufen 19 der Abstufungen 18 jeweils in einer etwa quer zur Strömungsrichtung angeordneten Ebene, während die die Stufen 19 miteinander verbindenden Axialflächen 20 an der Gehäuse-Innenseite etwa in Strömungsrichtung angeordnet sind. Wie aus Fig. 10 gut erkennbar ist, nehmen die axialen Höhen h1, h2 usw. in Strömungsrichtung zu. Durch die Abstufungen vermindert sich die Fließgeschwindigkeit des den Durchflußbegrenzer durchströmenden Mediums und damit vor allem auch der Geräuschpegel des Durchflußbegrenzers 100. Da die abströmseitigen Abstufungen zunehmend größere axiale Höhen h1, h2 usw. aufweisen, paßt sich der zur Verfügung stehende Durchtrittsquerschnitt besser der geringerwerdenden Durchflußgeschwindigkeit an. An der Auslaufseite des erfindungsgemäßen Durchflußbegrenzers 100 ist die Austrittsgeschwindigkeit des den Durchflußbegrenzer 100 durchströmenden Mediums entsprechend gering.

In Fig. 11 ist das Innengehäuse 3 des Durchflußbegrenzers 100 aus Fig. 10 in einem Längsschnitt dargestellt. Deutlich zu erkennen ist, daß insbesondere die äußeren, in den Ringspalt 21 ragenden Kanten zwischen den Stufen 19 und den angrenzenden Axialflächen 20 des Gehäuses 3 scharfkantig ausgebildet sind. Durch diese, zwischen den Stufen 19 und den Axialflächen 20 gebildeten scharfen Kanten werden zahlreiche Strömungsabrisse erzeugt, die eine Verminderung der Durchflußgeschwindigkeit und des mit dem Betrieb des Durchflußbegrenzers 100 verbundenen Geräuschpegels begünstigen.

In den Fig. 11 u.12 ist auch die einströmseitig angeordnete zylindrische Ausnehmung 4 für den Drosselkörper 5 zu sehen, die einerseits eine Abdichtung und andererseits eine Schiebeauflage für die radialen Bewegungen des Drosselkörpers 5 bildet. Auch der Drosselkörper 5 weist an seinem außenrandnahen Bereich als radial nach außen hin randoffene Nuten 9 ausgebildete Durchgangsöffnungen 8 auf, durch die der Drosselkörper 5 in seiner Nachgiebigkeit und Elastizität sowie in seiner Steuerkennlinie auch bei kleineren Drücken verbessert wird.

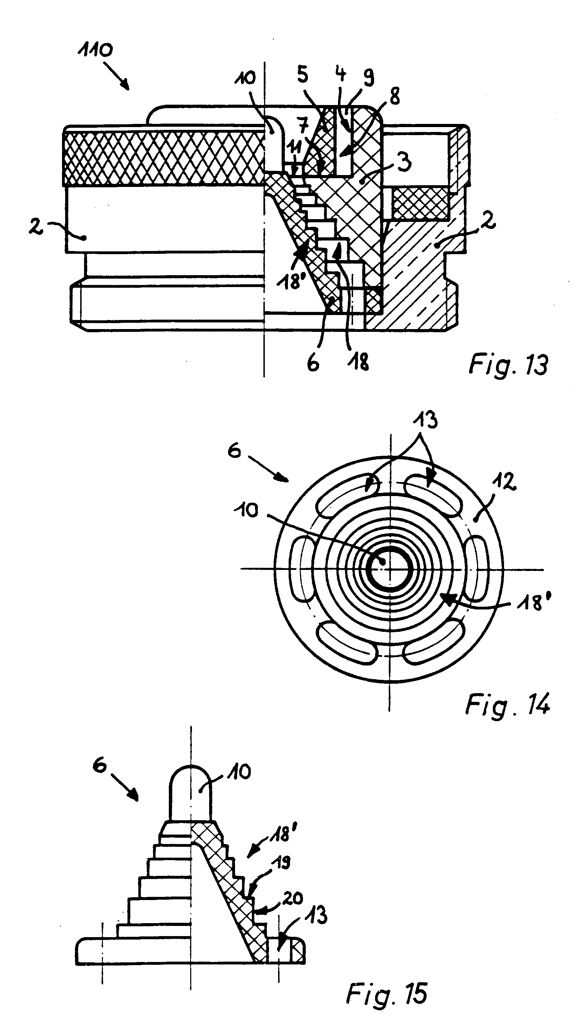

In Fig. 13 ist ein halbseitig längsgeschnittener Durchflußbegrenzer 110 dargestellt, der an der Außenseite seines Steuerkegels 6 sowie an der sich in Strömungsrichtung erweiternden Innenseite seines Gehäuses 3 ringstufenförmige Abstufungen 18 aufweist. Wie Fig. 13 zeigt, sind dabei die Abstufungen 18 des Gehäuses 3 gegenüber den Abstufungen 18′ des Steuerkegels 6 versetzt angeordnet. Sowohl die einzelnen Abstufungen 18′ des Steuerkegels 6 als auch die Abstufungen 18 des Gehäuses 3 nehmen in ihren axialen Höhen in Strömungsrichtung zu. Im übrigen unterscheidet sich auch der Durchflußbegrenzer 110 kaum von den Durchflußbegrenzern 1 u.100 aus Fig. 1,10.
Aus der in Fig. 14 dargestellten Draufsicht desSteuerkegels 6 des Durchflußbegrenzers 110 ist zu entnehmen, daß die am Ringflansch 12 seines Steuerkegels 6 vorgesehenen Durchtrittsöffnungen ebenfalls als Ringschlitze ausgebildet sind, die auf einem Kreisbogen angeordnet sind. Mit Ausnahme seiner hier ringstufenförmige Abstufungen 18′ aufweisenden Aussenfläche unterscheidet sich der Steuerkegel 6 praktisch nicht von dem in Fig.9 dargestellten Steuerkegel.

Die oben beschriebene Verformung des Drosselkörpers 5 ist durch die gestrichelte Linie in Fig. 2 maßstäblich verzerrt dargestellt.
Zweckmäßigerweise werden sowohl der Steuerkopf 6 als auch das Gehäuse 3 im wesentlichen aus Kunststoff hergestellt.

Fig. 16 zeigt noch einen Durchflußbegrenzer 1 mit einem in Durchströmrichtung (Pf 1) manuell verstellbaren Steuerkegel 6 . Dieser weist einen Innensechskant 24 als Angriffsstelle für einen von der Abströmseite her einführbaren Imbusschlüssel auf. Der Durchflußbegrenzer 1 läßt sich dadruch wahlweise auf eine bestimmte Durchflußklasse einstellen, so daß mit dieser einen einstellbaren Ausführungsform mehrere verschiedene Ausführungsformen von Durchflußbegrenzern mit verschiedenen Durchflußklassen ersetzt werden können. Dies ist hinsichtlich der Fertigung, Lagerhaltung und auch für den praktischen Gebrauch vorteilhaft.
Der Steuerkegel 6 hat ein Außengewinde 23 , welches in ein Innengewinde 22 im Gehäuse 3 eingeschraubt ist, so daß der Steuerkegel 6 dadurch axial verstellbar ist.

## Patentansprüche

1. Durchflußbegrenzer für in Leitungen strömende Medien, mit einem in einer Ausnehmung (4) eines Gehäuses (3) untergebrachten, sich unter der beim Durchströmen bildenden Druckdifferenz verformenden, je nach seiner Verformung den Durchflußquerschnitt ändernden elastischen, ringförmigen Drosselkörper (5), der abströmseitig auf einer Ringschulter (7) aufliegt, und mit einem, von der Einlaufseite nach der Auslaufseite des Begrenzers hin verlaufendem, zwischen dem Drosselkörper (5) und einem darin eingreifenden, zentrischen Zapfen (10) gebildeten Durchlaufringraum, **dadurch gekennzeichnet**, daß der ringförmige Drosselkörper (5) innerhalb seines auf der Ringschulter (7) aufliegenden außenrandnahen Ringbereiches wenigstens eine in Durchflußrichtung orientierte Stau-Ausnehmung (8, 9) aufweist.

2. Durchflußbegrenzer nach Anspruch 1, dadurch gekennzeichnet, daß die Stau-Ausnehmungen als Durchgangsöffnungen (8) ausgebildet und in Umfangsrichtung vorzugsweise gleichmäßig verteilt angeordnet sind.

3. Durchflußbegrenzer nach Anspruch 1 oder 2, dadurch gekennzeichnet, daß die Stau-Ausnehmungen als radial nach außen hin randoffene Nuten (9) ausgebildet sind.

4. Durchflußbegrenzer nach einem oder mehreren der Ansprüche 1 bis 3, dadurch gekennzeichnet, daß zwei bis etwa fünfzehn, vorzugsweise zehn Stau-Ausnehmungen (8) in dem Drosselkörper (5) vorgesehen sind.

5. Durchflußbegrenzer nach einem oder mehreren der Ansprüche 1 bis 4, dadurch gekennzeichnet, daß der Drosselkörper (5) einen zuflußseitig kegelförmig aufgeweiteten, zentralen Durchtritt aufweist, und daß der dort von der Abströmseite her eingreifende Zapfen (10) kürzer als die axiale Erstreckung des Drosselkörpers (5) ist.

6. Durchflußbegrenzer nach einem oder mehreren der Ansprüche 1 bis 5, dadurch gekennzeichnet, daß die Stau-Ausnehmungen (8) vorzugsweise einen eckigen, gegebenenfalls einen runden oder gerundeten Querschnitt haben.

7. Durchflußbegrenzer nach einem oder mehreren der Ansprüche 1 bis 6, dadurch gekennzeichnet, daß der Drosselkörper (5) aus weichelastischem, insbesondere lebensmittelechtem Material, vorzugsweise aus Silikon oder dergleichen Elastomer, besteht.

8. Durchflußbegrenzer nach einem oder mehreren der Ansprüche 1 bis 7, mit einem sich an den in den Drosselkörper (5) ragenden Zapfen (10) in Strömungsrichtung anschließenden Steuerkegel (6), der sich in einem in Strömungsrichtung vorzugsweise konisch erweiternden Gehäusehohlraum befindet, wobei zwischen dem Gehäuse (3) und dem Steuerkegel (6) ein Ringspalt gebildet ist, und wobei der Gehäusehohlraum durch einen am Steuerkegel (6) befindlichen Flansch oder Ringflansch (12) mit Durchtrittsöffnungen (13) verschlossen ist, dadurch gekennzeichnet, daß die Durchtrittsöffnungen in dem Flansch oder Ringflansch (12) als Ringschlitze (13) ausgebildet sind.

9. Durchflußbegrenzer nach Anspruch 8, dadurch gekennzeichnet, daß die Austrittskanten (14) der Durchtrittsöffnungen (13) in dem Flansch oder Ringflansch (12) scharfkantig ausgebildet sind.

10. Durchflußbegrenzer nach Anspruch 8 oder 9, dadurch gekennzeichnet, daß die Außenseite des Steuerkegels (6) und/oder die sich in Strömungsrichtung erweiternde Innenseite des Gehäuses (3) eine aufgerauhte Oberfläche aufweist.

11. Durchflußbegrenzer nach einem oder mehreren der Ansprüche 8 bis 10, dadurch gekennzeichnet, daß die Außenseite des Steuerkegels (6) und/oder die sich in Strömungsrichtung erweiternde Innenseite des Gehäuses (3) ringstufen- oder kaskadenförmige Abstufungen (18, 18 ') aufweist.

12. Durchflußbegrenzer nach Anspruch 11, dadurch gekennzeichnet, daß die Stufen (19) der Abstufungen (18, 18 ') jeweils in einer etwa quer zur Strömungsrichtung angeordneten Ebene liegen, und daß die die Stufen (19) miteinander verbindenden Axialflächen (20) von Steuerkegel-Außenseite und/oder Gehäuse-Innenseite etwa in Strömungsrichtung angeordnet sind.

13. Durchflußbegrenzer nach Anspruch 11 oder 12, dadurch gekennzeichnet, daß insbesondere die äußeren, in den Ringspalt (21) ragenden Kanten zwischen den Stufen (19) und den angrenzenden Axialflächen (20) von Steuerkegel (6) und/oder Gehäuse (3) scharfkantig ausgebildet sind.

14. Durchflußbegrenzer nach Anspruch 11 oder 12, dadurch gekennzeichnet, daß die zwischen den Stufen (19) und den angrenzenden Axialflächen (20) von Steuerkegel (6) und/oder Gehäuse (3) jeweils gebildeten Kanten abgerundet sind.

15. Durchflußbegrenzer nach einem oder mehreren der Ansprüche 11 bis 14, dadurch gekennzeichnet, daß die Abstufungen (18, 18') von Steuerkegel (6) und/oder Gehäuse (3) unterschiedliche axiale Höhen aufweisen.

16. Durchflußbegrenzer nach einem oder mehreren der Ansprüche 11 bis 15, dadurch gekennzeichnet, daß die axialen Höhen der einzelnen Abstufungen (18, 18') von Steuerkegel (6) und/oder Gehäuse (3) im Vergleich zu der in Strömungsrichtung sich jeweils anschließenden Abstufung größer ausgebildet sind.

17. Durchflußbegrenzer nach einem oder mehreren der Ansprüche 1 bis 15, dadurch gekennzeichnet, daß die axialen Höhen der einzelnen Abstufungen (18, 18') von Steuerkegel (6) und/oder Gehäuse (3) im Vergleich zu der in Strömungsrichtung sich jeweils anschließenden Abstufung kleiner ausgebildet sind.

18. Durchflußbegrenzer nach einem oder mehreren der Ansprüche 11 bis 14, dadurch gekennzeichnet, daß die Abstufungen (18, 18') von Steuerkegel (6) und/oder Gehäuse (3) jeweils etwa die gleiche axiale Höhe aufweisen.

19. Durchflußbegrenzer nach einem oder mehreren der Ansprüche 11 bis 18, dadurch gekennzeichnet, daß die Abstufungen (18') des Steuerkegels (6) gegenüber den Abstufungen (18) des Gehäuses (3) versetzt angeordnet sind.

20. Durchflußbegrenzer nach einem oder mehreren der Ansprüche 8 bis 19, dadurch gekennzeichnet, daß die Außenseite des Steuerkegels (6) eine aufgerauhte Oberfläche und die sich in Strömungsrichtung erweiternde Innenseite des Gehäuses (3) ringstufen- oder kaskadenförmige Abstufungen (18) aufweist.

21. Durchflußbegrenzer nach einem oder mehreren der Ansprüche 1 bis 20, dadurch gekennzeichnet, daß in die Gehäuse-Ausnehmung (4) für den Drosselkörper (5) wenigstens zwei in der die Gehäuse-Ausnehmung (4) umgrenzenden Wand befindliche und insbesondere diametral angeordnete Steuerbohrungen (15) münden.

22. Durchflußbegrenzer nach Anspruch 21, dadurch gekennzeichnet, daß die Steuerbohrungen (15) nahe dem Absatz (7) der Gehäuse-Ausnehmung (4) angeordnet sind und radial gerade oder radial schräg zum Absatz (7) hin verlaufend ausgebildet sind.

23. Durchflußbegrenzer nach einem oder mehreren der Ansprüche 8 bis 22, dadurch gekennzeichnet, daß der Steuerkegel (6) und vorzugsweise auch das Gehäuse (3) im wesentlichen aus Kunststoff sind.

24. Durchflußbegrenzer nach einem oder mehreren der Ansprüche 1 bis 23, dadurch gekennzeichnet, daß außer dem sich druckabhängig verformenden Drosselkörper (5) im Gehäuse (3) des Durchflußbegrenzers (1) ein in Strömungsrichtung (Pf 1) manuell betätig- und einstellbarer Steuerkegel (6) zum Verändern der Durchflußmenge vorgesehen ist.

## Claims

1. A flow limiter for media flowing in conduits, including an elastic, annular throttle member (5) which is accommodated in a recess (4) of a casing (3) and in the downstream direction rests upon an annular shoulder (7), said throttle member deforming under the pressure difference produced as a medium flows through and changing the sectional area of flow according to said deformation, and further including a flow annulus which runs from the inlet side towards the outlet side of the limiter and is formed between the throttle member (5) and a centric peg (10) engaging therein, **characterized in that** the annular throttle member (5) has within the annular area thereof which is near the outer edge and rests upon the annular shoulder (7) at least one banking recess (8, 9) oriented in the direction of flow.

2. A flow limiter as claimed in claim 1, characterized in that the banking recesses take the form of through openings (8) and are arranged in the circumferential direction, preferably so as to be evenly distributed.

3. A flow limiter as claimed in claim 1 or claim 2, characterized in that the banking recesses take the form of grooves (9) open-ended radially outwardly.

4. A flow limiter as claimed in one or more of claims 1 to 3, characterized in that two to about fifteen, preferably ten banking recesses (8) are provided in the throttle member (5).

5. A flow limiter as claimed in one or more of claims 1 to 4, characterized in that the throttle member has a central passage widened conically in the direction of inflow, and that the peg engaging there from the outflow side is shorter than the axial expanse of the throttle member (5).

6. A flow limiter as claimed in one or more of claims 1 to 5, characterized in that the banking recesses (8) preferably have an angular, optionally a round or rounded cross section.

7. A flow limiter as claimed in one or more of claims 1 to 6, characterized in that the throttle member (5) consists of flexible material, particularly of material which is not of noxious nature, preferably of silicon or like elastomer.

8. A flow limiter as claimed in one or more of claims 1 to 7, including a control cone (6) which in the direction of flow adjoins the peg (10) projecting into the throttle member (5) and is located in a casing cavity preferably widening conically in the direction of flow, wherein an annular gap is formed between the casing (3) and the control cone (6), and wherein the casing cavity is closed by a flange or circular flange (12) which is situated on the control cone (6) and has openings (13) therethrough, characterized in that the openings in the flange or circular flange (12) take the form of annular slots (13).

9. A flow limiter as claimed in claim 8, characterized in that the outlet edges (14) of the openings (13) in the flange or circular flange (12) are sharp-edged.

10. A flow limiter as claimed in claim 8 or claim 9, characterized in that the exterior of the control cone (6) and/or the casing (3) interior widening in the direction of flow has a roughened surface.

11. A flow limiter as claimed in one or more of claims 8 to 10, characterized in that the exterior of the control cone (6) and/or the casing (3) interior widening in the direction of flow has annular step-like or cascade-like graduations (18, 18').

12. A flow limiter as claimed in claim 11, characterized in that the steps (19) of the graduations (18, 18') in each case lie in a plane disposed approximately crosswise to the direction of flow, and that the axial faces (20) interconnecting the steps (19) and forming part of the control cone exterior and/or casing interior are arranged approximately in the direction of flow.

13. A flow limiter as claimed in claim 11 or claim 12, characterized in that particularly the outer edges which project into the annular gap (21) and are formed between the steps (19) and the adjacent axial faces (20) of control cone (6) and/or casing (3) are sharp-edged.

14. A flow limiter as claimed in claim 11 or claim 12, characterized in that the edges formed between the steps (19) and the adjacent axial faces (20) of control cone (6) and/or casing (3) are rounded.

15. A flow limiter as claimed in one or more of claims 11 to 14, characterized in that the graduations (18, 18') of control cone (6) and/or casing (3) have different axial heights.

16. A flow limiter as claimed in one or more of claims 11 to 15, characterized in that the axial heights of the individual graduations (18, 18') of control cone (6) and/or casing (3) are greater compared to the next respective graduation in the direction of flow.

17. A flow limiter as claimed in one or more of claims 1 to 15, characterized in that the axial heights of the individual graduations (18, 18') of control cone (6) and/or casing (3) are smaller compared to the next respective graduation in the direction of flow.

18. A flow limiter as claimed in one or more of claims 11 to 14, characterized in that the graduations (18, 18') of control cone (6) and/or casing (3) are in each case of approximately the same axial height.

19. A flow limiter as claimed in one or more of claims 11 to 18, characterized in that the graduations (18') of the control cone (6) are staggered relative to the graduations (18) of the casing (3).

20. A flow limiter as claimed in one or more of claims 8 to 19, characterized in that the exterior of the control cone (6) has a roughened surface and the casing (3) interior widening in the direction of flow has annular step-like or cascade-like graduations (18).

21. A flow limiter as claimed in any one or more of claims 1 to 20, characterized in that at least two control holes (15), particularly diametrally arranged ones, situated in the wall bounding the casing recess (4) open out into the casing recess (4) for the throttle member (5).

22. A flow limiter as claimed in claim 21, characterized in that the control holes (15) are arranged near the shoulder (7) of the casing recess (4) and are devised to run radially straight or radially slantwise towards the shoulder (7).

23. A flow limiter as claimed in one or more of claims 8 to 22, characterized in that the control cone (6) and preferably also the casing (3) are essentially of plastic.

24. A flow limiter as claimed in one or more of claims 1 to 23, characterized in that in addition to the throttle member (5) deforming in dependence on pressure, a control cone (6) manually operable and settable in the direction of flow (Pf 1) is provided in the casing (3) of the flow limiter (1) and serves to alter the rate of flow.

## Revendications

1. Limiteur de débit pour des fluides circulant dans des conduites, comprenant un dispositif d'étranglement du courant (5) annulaire et élastique logé dans un creux (4) d'un boîtier (3), qui se déforme sous l'effet de la différence de pression générée par la circulation du fluide, qui, en fonction de sa déformation, modifie la section de passage et qui repose sur un épaulement annulaire (7), et comprenant un espace annulaire de passage s'étendent du côté de l'entrée vers le côté de sortie du limiteur et formé entre le dispositif d'étranglement du courant (5) et un pivot (10) central pénétrant dans ce dernier, caractérisé en ce que le dispositif d'étranglement du courant (5) annulaire présente, à l'intérieur de sa zone annulaire proche du bord qui repose sur l'épaulement annulaire (7), au moins un évidement réducteur de pression (8, 9) orienté dans le sens de circulation.

2. Limiteur de débit selon la revendication 1, caractérisé en ce que les évidements réducteurs de pression sont réalisés en tant qu'orifices de passage (8) et sont disposés, de préférence, uniformément répartis vers le pourtour.

3. Limiteur de débit selon la revendication 1 ou 2, caractérisé en ce que les évidements réducteurs de pression sont réalisés en tant que rainures (9) à bord ouvert s'étendent radialement vers l'extérieur.

4. Limiteur de débit selon l'une ou plusieurs des revendications 1 à 3, caractérisé en ce que sont prévus de deux à environ quinze, de préférence dix évidements réducteurs de pression (8) dans le dispositif d'étranglement du courant (5).

5. Limiteur de débit selon l'une ou plusieurs des revendications 1 à 4, caractérisé en ce que le dispositif d'étranglement du courant (5) présente un passage central élargi en forme de cône du côté de l'entrée, et en ce que le pivot (10) pénétrant à cet endroit par le côté de la sortie est plus court que l'étendue axiale du dispositif d'étranglement du courant (5).

6. Limiteur de débit selon l'une ou plusieurs des revendications 1 à 5, caractérisé en ce que les évidements réducteurs de pression (8) présentent, de préférence, une section transversale anguleuse, le cas échéant ronde ou arrondie.

7. Limiteur de débit selon l'une ou plusieurs des revendications 1 à 6, caractérisé en ce que le dispositif d'étranglement du courant (5) se compose d'un matériau souple, notamment alimentaire, de préférence de silicone ou d'un élastomère analogue.

8. Limiteur de débit selon l'une ou plusieurs des revendications 1 à 7, comprenant un cône de commande (6) se raccordant dans le sens de l'écoulement au pivot (10) pénétrant dans le dispositif d'étranglement du courant (5), qui se trouve dans une cavité du boîtier s'élargissant, de préférence, de façon conique dans le sens de l'écoulement, sachant qu'entre le boîtier (3) et le cône de commande (6) est formée une fente annulaire et que la cavité du boîtier est fermée par une bride ou une bride annulaire (12) munie d'orifices de passage (13) qui est située sur le cône de commande (6), caractérisé en ce que les orifices de passage dans la bride ou la bride annulaire (12) sont réalisés en tant que fentes annulaires (13).

9. Limiteur de débit selon la revendication 8, caractérisé en ce que les arêtes de sortie (14) des orifices de passage (13) dans la bride ou la bride annulaire (12) sont vives.

10. Limiteur de débit selon la revendication 8 ou 9, caractérisé en ce que le côté extérieur du cône de commande (6) et/ou le côté intérieur du boîtier (3) qui s'élargit dans le sens de l'écoulement présente une surface rugueuse.

11. Limiteur de débit selon l'une ou plusieurs des revendications 8 à 10, caractérisé en ce que le côté extérieur du cône de commande (6) et/ou le côté intérieur du boîtier (3) qui s'élargit dans le sens de l'écoulement présente des étagements (18, 18') en forme de gradins circulaires ou de cascade.

12. Limiteur de débit selon la revendication 11, caractérisé en ce que les échelons (19) des étagements (18, 18') se situent chacun dans un plan disposé approximativement transversalement par rapport au sens de l'écoulement, et en ce que les surfaces axiales (20) du côté extérieur du cône de commande et/ou du côté intérieur du boîtier qui relient les échelons (19) entre eux sont disposées approximativement dans le sens de l'écoulement.

13. Limiteur de débit selon la revendication 11 ou 12, caractérisé en ce que notamment les arêtes extérieures pénétrant dans la fente annulaire (21) sont réalisées vives entre les échelons (19) et les surfaces axiales (20) adjacentes du cône de commande (6) et/ou du boîtier (3).

14. Limiteur de débit selon la revendication 11 ou 12, caractérisé en ce que les arêtes qui sont chaque fois formées entre les échelons (19) et les surfaces axiales (20) adjacentes du cône de commande (6) et/ou du boîtier (3) sont arrondies.

15. Limiteur de débit selon l'une ou plusieurs des revendication 11 à 14, caractérisé en ce que les étagements (18, 18') du cône de commande (6) et/ou du boîtier (3) présentent différentes hauteurs axiales.

16. Limiteur de débit selon l'une ou plusieurs des revendications 11 à 15, caractérisé en ce que les hauteurs axiales des différents étagements (18, 18') du cône de commande (6) et/ou du boîtier (3) sont réalisées plus grandes par rapport à l'étagement qui leur fait chaque fois suite dans le sens de l'écoulement.

17. Limiteur de débit selon l'une ou plusieurs des revendications 1 à 15, caractérisé en ce que les hauteurs axiales des différents étagements (18, 18') du cône de commande (6) et/ou du boîtier (3) sont réalisées plus petites par rapport à l'étagement qui leur fait chaque fois suite dans le sens de l'écoulement.

18. Limiteur de débit selon l'une ou plusieurs des revendications 11 à 14, caractérisé en ce que les étagements (18, 18') du cône de commande (6) et/ou du boîtier (3) présentent chaque fois approximativement la même hauteur axiale.

19. Limiteur de débit selon l'une ou plusieurs des revendications 11 à 18, caractérisé en ce que les étagements (18') du cône de commande (6) sont disposés décalés par rapport aux étagements (18) du boîtier (3).

20. Limiteur de débit selon l'une ou plusieurs des revendications 8 à 19, caractérisé en ce que le côté extérieur du cône de commande (6) présente une surface rugueuse, et en ce que le côté intérieur du boîtier (3) s'élargissant dans le sens de l'écoulement présente des étagements (18) en forme de gradins circulaires ou de cascade.

21. Limiteur de débit selon l'une ou plusieurs des revendications 1 à 20, caractérisé en ce que dans le creux (4) du boîtier prévu pour le dispositif d'étranglement du courant (5) débouchent au moins deux perçages de commande (15) situés dans la paroi délimitant le creux (4) du boîtier et disposés notamment diamétralement opposés.

22. Limiteur de débit selon la revendication 21, caractérisé en ce que les perçages de commande (15) sont disposés à proximité de l'épaulement (7) du creux (4) du boîtier et sont réalisés comme s'étendent radialement en ligne droite ou radialement en biais vers l'épaulement (7).

23. Limiteur de débit selon l'une ou plusieurs des revendications 8 à 22, caractérisé en ce que le cône de commande (6) et, de préférence, également le boîtier (3) sont essentiellement en matière plastique.

24. Limiteur de débit selon l'une ou plusieurs des revendications 1 à 23, caractérisé en ce que, dans le boîtier (3) du limiteur de débit (1), en plus du dispositif d'étranglement du courant (5) se déformant en fonction de la pression est prévu un cône de commande (6) pouvant être actionné ou réglé manuellement dans le sens de l'écoulement (Pf 1) pour modifier le débit.
